# EUROPÄISCHE PATENTSCHRIFT

(11) **EP 0 760 327 B1**
(45) Veröffentlichungstag und Bekanntmachung des Hinweises auf die Patenterteilung: **03.03.1999**
(21) Anmeldenummer: 96112115.9
(22) Anmeldetag: 26.07.1996
(51) Int. Cl.: B62D 21/11, B60G 25/00

(54) **Fahrzeugaufbau**
Vehicle structure
Structure d'un véhicule

(30) Priorität: 02.09.1995 DE 19532531; 22.02.1996 DE 19606506
(43) Veröffentlichungstag der Anmeldung: 05.03.1997
(73) Patentinhaber: Dr.Ing.h.c. F. Porsche Aktiengesellschaft, 70435 Stuttgart (DE)
(72) Erfinder: Söffge, Friedhelm, 71229 Leonberg (DE); Mehrkens, Sigrid, 75203 Königsbach-Stein (DE); Preiss, Michael, 71665 Vaihingen (DE)

(56) Entgegenhaltungen:
- EP-A- 0 274 993
- EP-A- 0 291 650
- DE-A- 3 026 876
- DE-A- 4 244 216
- DE-A- 4 244 217
- US-A- 3 409 098

## Beschreibung

Die Erfindung bezieht sich auf einen Fahrzeugaufbau, der mit Längsträgern der Karosserie versteifend verbundene Elemente umfaßt, nach dem Oberbegriff des Anspruchs 1.

Aus der DE 42 44 216 A1 ist ein dem Oberbegriff des Anspruches 1 entsprechenden Fahrzeugaufbau mit V-förmigen Streben bekannt, die einerseits mit Längsträgern und andererseits mit einer heckseitigen und vertikal angestellten Querstütze verbunden sind. Desweiteren ist aus der DE 42 44 217 A1 ein Fahrzeugaufbau bekannt, der eine mit den Längsträgern verbundene Platte aufweist, welche zur Versteifung des Aufbaus dient.

Aufgabe der Erfindung ist es, einen verbesserten Fahrzeugaufbau zu schaffen, der torsionssteif ist, eine Gewichtsersparnis erbringt, einfach zu montieren ist und eine steile Anbindung der Radaufhängung an den Fahrzeugaufbau gewährleistet. Desweiteren soll noch eine gezielte Wärmeabfuhr vom Getriebe bzw. vom Antriebsaggregat erreicht werden.

Diese Aufgabe wird durch die kennzeichnenden Merkmale des Anspruchs 1 gelöst. Weitere vorteilhafte Merkmale beinhalten die Unteransprüche.

Es hat sich bei Fahrzeugen offener Bauweise, wie Cabriolet-Fahrzeugen gezeigt, daß der Fahrzeugaufbau starken Torsionsbelastungen ausgesetzt ist. Um dies zu unterbinden, sind V-förmige Streben bekannt, die mit den Längsträgern des Fahrzeugaufbaus verbunden sind und im Fahrzeugheck zusammenlaufen und an einer Querstütze befestigt sind. Eine solche bekannte Versteifung mit Streben ist in der Montage durch die Vielteiligkeit relativ aufwendig und eine auftretende Torsion sowie quergerichtete Verschiebungen eines angebundenen Seitenträgers zur Aufnahme einer Radaufhängung können nicht ausreichend aufgenommen werden. Die Verschiebungen des Seitenträgers resultieren im Fahrbetrieb im wesentlichen aus Seitenkräften auf das Rad, die über die Radführungslenker den Seitenträger belasten.

Zur Behebung dieser Mängel ist anstelle der bekannten Streben im Heckbereich des Fahrzeugaufbaus eine einteilige Trägerplatte vorgesehen, die unmittelbar an die Streben anschließt. Sie ist an ihren vorderen und hinteren Enden jeweils mit einem Querträger bzw. einer Stütze des Fahrzeugaufbaus verbunden und im Bereich der Anbindung an die freien Enden der Streben ist ein von der Platte gebildeter integrierter Querträger vorgesehen, der gleichzeitig mit dem Seitenträger verbunden wird. In diesem sind die Radführungslenker für die Radaufhängung abgestützt. Die Trägerplatte besteht im wesentlichen aus einem einteilig geformten Blech mit profilierten Einprägungen in Form von im Querschnitt U-förmigen Sicken am Rand. Diese Sicken erstrecken sich über den gesamten Umfang der Platte und bilden auch den Querträger.

Die Form der Trägerplatte ist so ausgeführt, daß die V-förmigen Streben durch die als Sicken ausgeführten profilierten Ränder verlängert werden und in der heckseitig angeordneten vertikalen Querstütze auslaufen. Die Platte umfaßt zwei trapezförmige Flächenteile, die über den Querträger miteinander verbunden sind.

Zur einfachen Verbindung der einteiligen Trägerplatte sind in den Verbindungsbereichen mit dem Querträger, der Querstütze und den Streben jeweils plane Anschlußflächen im Steg der Sicken vorgesehen.

In der Trägerplatte ist ein querverlaufender Durchbruch vorgesehen, der zur unbehinderten Anordnung eines zwischen den beiden Hinterrädern angeordneten Stabilisators dient. Eine weitere Öffnung dient zur Zugänglichkeit zu einer Getriebeölablasschraube.

Mit der Trägerplatte wird eine sogenannte Schubfunktion erzielt, die neben der Vermeidung einer Torsion des Fahrzeugaufbaus auch eine Querverschiebung des die Radaufhängung aufnehmenden Seitenträgers verhindert. Desweiteren ist der Unterboden im Bereich der Antriebseinheit im wesentlichen geschützt abgedeckt.

Nach einer weiteren Ausführung der Erfindung besteht das Luftleitelement in vorteilhafter Weise aus einem Luftleitkanäle bildendem Blech, welches kanalartige Ausprägungen zu jeder Seite einer Längsmittenachse des Fahrzeuges aufweist. Eine seitliche Begrenzung des Luftleitelements erfolgt über hochgestellte Außenränder. Eine Luftumlenkung nach oben zum Getriebe hin erfolgt über eine an das Luftleitelement anschließende Umlenkschale, die ebenfalls einen hochgestellten Rand aufweist.

Dieses Luftleitelement mit der Umlenkschale führt die entgegen der Fahrtrichtung anströmende Luft zwangsweise zum Getriebegehäuse des Antriebsaggregats und kühlt dieses durch Wärmeabfuhr über den Luftstrom. Die Kontur des querliegenden hochgestellten Randes ist so gewählt, daß das Getriebegehäuse entsprechend anzuordnen ist. Die Eckkanten des hochgestellten Randes sind hochgezogen, damit der Luftstrom entsprechend geleitet werden kann.

Ausführungsbeispiele der Erfindung sind in den Zeichnungen dargestellt und werden im folgenden näher beschrieben.
Es zeigen:
- Fig. 1: eine schaubildliche Darstellung einer eingebauten Trägerplatte,

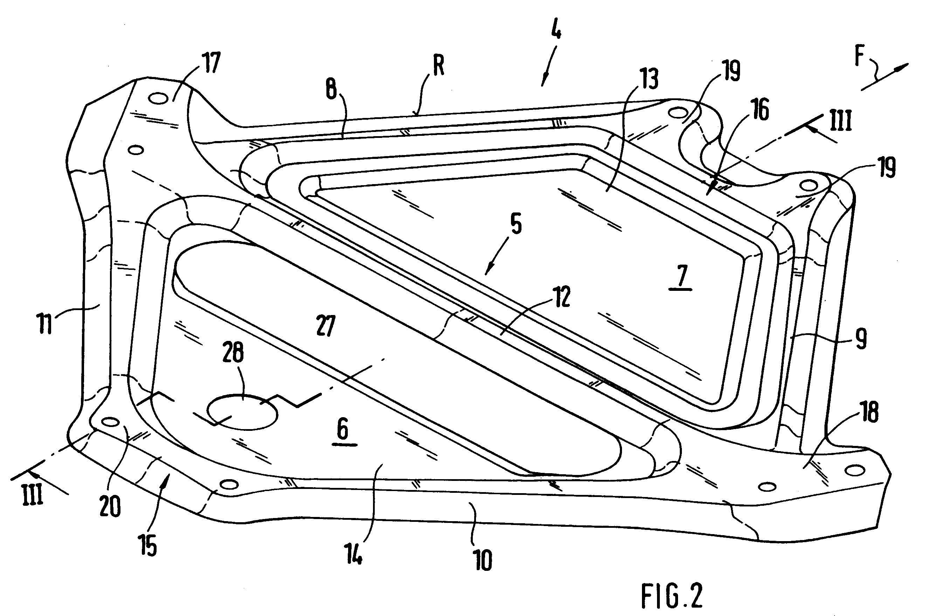

- Fig. 2: eine schaubildliche Darstellung der einteiligen Trägerplatte,

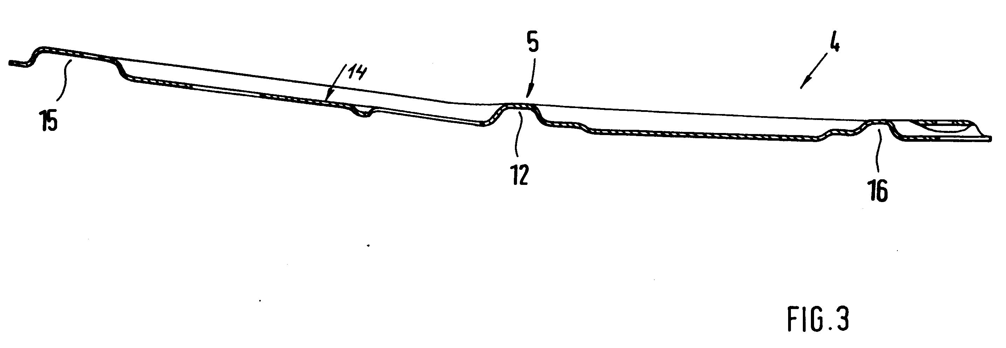

- Fig. 3: einen Schnitt nach der Linie III-III der Fig. 2 durch die Trägerplatte,
- Fig. 4: eine Draufsicht auf ein Trägerblech mit einer Luftleitvorrichtung,
- Fig. 5: eine schaubildliche Darstellung des Trägerblechs mit der Luftleitvorrichtung,
- Fig. 6: einen Schnitt nach der Linie VI-VI der Fig. 5 durch eine Verbindungsstelle zwischen Luftleitelement und einer Umlenkschale,
- Fig. 7: einen Schnitt nach der Linie VII-VII der Fig. 5 durch eine Verbindungsstelle zwischen der Umlenkschale und der Trägerplatte und
- Fig. 8: einen Schnitt nach der Linie V-V der Fig.4 durch einen kanalartigen Lufteinlaß zwischen Luftleitvorrichtung und einem aufbauseitigen Querträger.

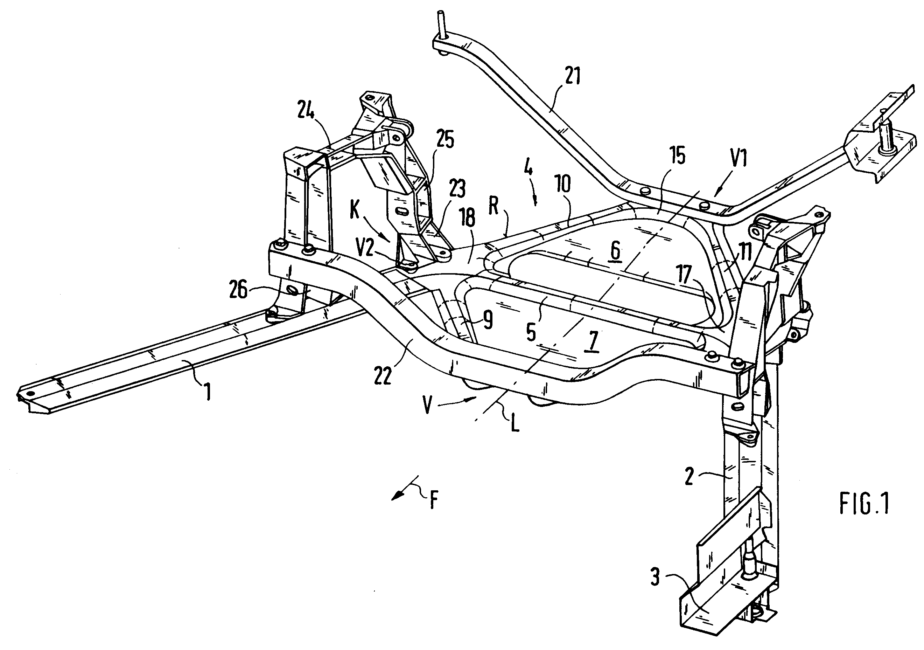

Der Fahrzeugaufbau eines Kraftfahrzeuges umfaßt im Heckbereich, wie in Fig. 1 näher gezeigt, zwei V-förmig angestellte Streben 1,2, die einerseits mit Längsträgern 3 und andererseits mit ihren freien Enden mit einer Trägerplatte 4 verbunden sind.

Die Trägerplatte 4 besteht aus zwei einen Querträger 5 aufweisenden trapezförmigen Segmenten 6,7. Diese weisen am Rand R umlaufende profilierte Abschnitte 8,9 und 10,11 auf, die im Querschnitt U-förmig ausgebildet sind und Sicken bilden. Entsprechend ist auch der Querträger 5 als Sicke 12 ausgeführt. Zwischen den Sicken 8,9 und 10,11 ist die Trägerplatte 4 als Blechteil mit Plattenflächen 13,14 ausgeführt. Die Sicken 8,9 des Segments 7 sind über eine parallel zum Querträger 5 liegende Sicke 16 und die Sicken 10,11 des Segments 6 sind über eine parallel zum Querträger 5 liegende Sicke 15 miteinander verbunden.

Die Trägerplatte 4 weist im Steg der Sicken 15,16 sowie im Übergangsbereich zwischen den Sicken 8 und 11 sowie 9 und 10 plane Anschlußflächen 19,20 und 17,18 auf. Über die Anschlußfläche 20 im Steg der Sicke 15 erfolgt eine heckseitige Verbindung V1 der Trägerplatte 4 mit einer vertikal ausgerichteten Querstütze 21. Über die Anschlußfläche 19 erfolgt eine Verbindung V des Querträgers 22 mit den Trägerplatten.

Die Verbindung V2 der Trägerplatte 4 mit den Streben 1,2 erfolgt über die planen Anschlußflächen 17,18. Gleichzeitig wird in diesem Verbindungsknoten K ein Fuß 23 eines Seitenträgers 24 befestigt. Dieser Seitenträger 24 weist Aufnahmen 25,26 für Lager von Radführungslenkern auf.

In dem Segment 6 sind ein Durchbruch 27 sowie eine Öffnung 28 vorgesehen. Der Durchbruch 27 dient zur unbehinderten Anordnung eines querverlaufenden Stabilisators und die Öffnung 28 ist zur Zugänglichkeit zu einer Getriebeölschraube vorgesehen.

Die Plattenflächen 13,14 der Segmente 6,7 zwischen den Sicken können mit längs, quer oder schräg angeordneten Versteifungsrippen verstärkt sein, was nicht näher eingezeichnet ist. Desweiteren können zur Kühlung bzw. zur Abführung von erwärmter Luft entsprechend ausgeführte Öffnungen bzw. Luftauslässe in diesen Flächenabschnitten 13,14 vorgesehen sein.

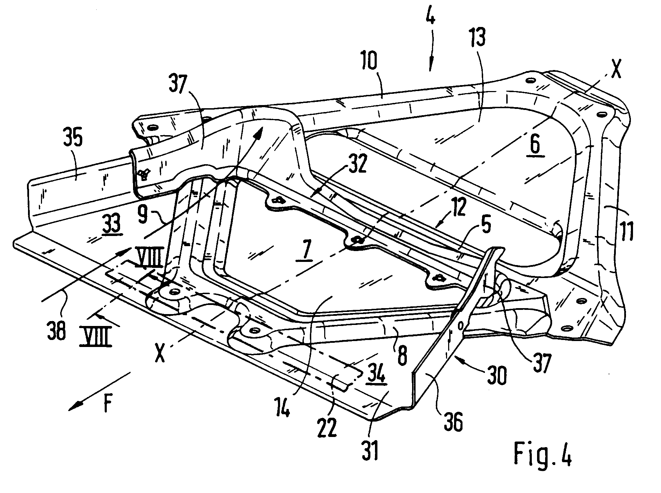

Nach der weiteren Ausführung gemäß den Fig. 4 bis 8 umfaßt die Trägerplatte 4 im wesentlichen eine Luftleitvorrichtung 30, welche aus einem Luftleitelement 31 und einer Umlenkschale 32 besteht.

Das Luftleitelement 31 ist vorzugsweise einteilig mit der Trägerplatte 4 ausgebildet und schließt am Segment 7 unmittelbar an. Zwischen dem Segment 7 und dem Element 31 werden zu beiden Seiten einer Längsmittenachse X-X des Fahrzeugs kanalartige Lufteinlässe 33, 34 durch Ausprägungen in der Trägerplatte 4 des Segments 7 gebildet. An den Außenkanten ist das Luftleitelement 31 mit hochgestellten Rändern 35, 36 versehen.

Im Bereich des Querträgers 5 der Platte 4 ist die Umlenkschale 32 querverlaufend angeordnet und weist einen durchgehenden hochgestellten Rand 37 auf. Dieser Rand 37 schließt sich unmittelbar an den Rand 35 des Luftleitelementes 31 an.

Wie in Fig. 4 näher dargestellt, ist der Lufteinlaß über das Luftleitelement 31 trichterförmig gestaltet, so daß die einströmende Luft in Pfeilrichtung 38 bis zum Umlenkelement 32 zwangsgeleitet und von hier aus über den hochgestellten Rand 37 zum Getriebegehäuse geführt wird.

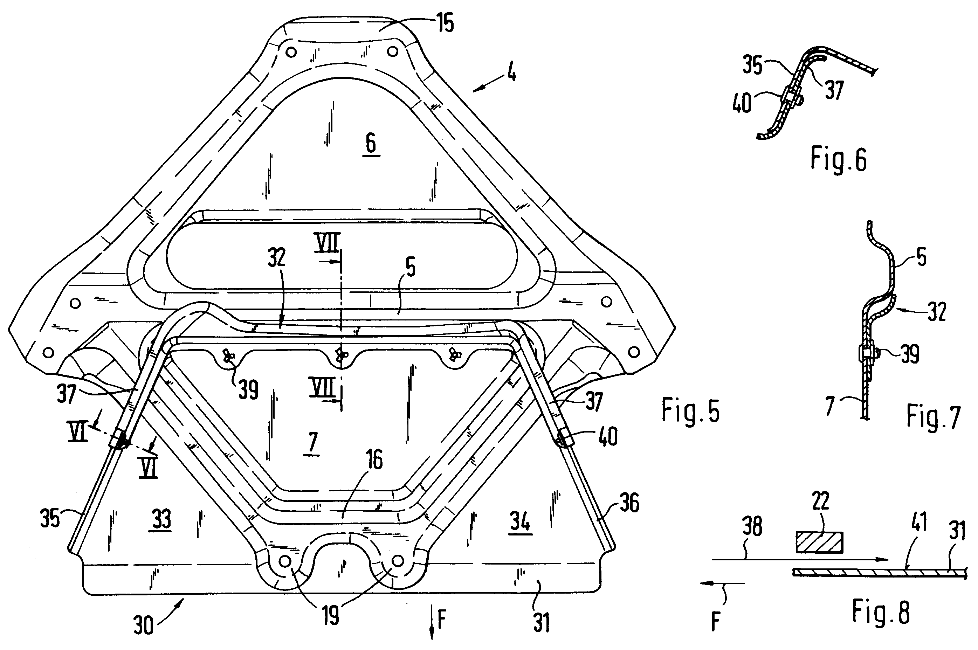

Das Umlenkelement 32 ist mit der Trägerplatte 4 und dem Luftleitelement 30 über Nietungen 39, 40 oder dergleichen, wie in den Fig. 6 und 7 näher gezeigt, verbunden.

Im Fahrbetrieb strömt die Luft entgegen der Fahrtrichtung F in Pfeilrichtung 38 zwischen den Querträger 22 und die Bodenfläche 41 des Luftleitelements 31 zum Umlenkelement 32. Von hier aus wird die Luft umgeleitet und strömt dann gegen das Getriebegehäuse, das etwa seine Trennung zum Motor im Bereich des Querträgers 22 aufweist. Durch diese gezielte Luftführung wird ein Wärmestau zwischen der Trägerplatte 4 und dem Antriebsaggregat, insbesondere dem Getriebe vermieden.

## Patentansprüche

1. Fahrzeugaufbau, der mit Längsträgern der Karosserie versteifend verbundene Elemente umfaßt, die aus zwei zum Fahrzeugheck V-förmig zulaufenden Streben (1,2) bestehen, welche über mindestens einen Querträger miteinander verbunden sind, dadurch gekennzeichnet, daß die freien Enden der V-förmigen Streben (1,2) mit einer einteiligen Trägerplatte (4) verbunden sind, die zwei über einen integrierten Querträger (5) miteinander verbundene trapezförmige Segmente (6,7) umfaßt, wobei das eine Segment (6) in Verlängerung der V-förmigen Streben (1,2) verlaufende profilierte Seitenkanten (R) aufweist.

2. Fahrzeugaufbau nach Anspruch 1, dadurch gekennzeichnet, daß die Trägerplatte (4) über mindestens eine in der Längsachse (L) des Fahrzeugs liegende - in bezug auf die Fahrtrichtung (F)- vordere Verbindungsstelle (V) an einem Querträger (22) und über eine weitere hinterliegende Verbindungsstelle (V1) mit einer vertikal ausgerichteten und am Fahrzeugaufbau befestigten Querstütze (21) verbunden ist und gleichzeitig eine Verbindung (V2) der Trägerplatte (4) mit den freien Enden der Streben (1,2) in einen Knotenpunkt (K) mit einem die Radführungslenker aufnehmenden Seitenträger (24) erfolgt.

3. Fahrzeugaufbau nach Anspruch 2, dadurch gekennzeichnet, daß das Segment (6) über mindestens eine Befestigung mit der vertikalen Querstütze (21) und das weitere Segment (7) über mindestens eine weitere Befestigung mit dem Querträger (22) verbunden ist.

4. Fahrzeugaufbau nach den Ansprüchen 1,2 oder 3, dadurch gekennzeichnet, daß die Trägerplatte (4) aus einem einteiligen Blechteil mit in den Plattenflächen (13,14) vorgesehenen profilierten Abschnitten (8,9,16 und 10,11,15) besteht, die den Querträger (5) sowie umlaufend die Ränder (R) bilden.

5. Fahrzeugaufbau nach Anspruch 4 oder einem der vorhergehenden Ansprüche, dadurch gekennzeichnet, daß die Trägerplatte (4) im Segment (6) zwischen den profilierten Abschnitten (10,11 und 15) einen Durchbruch (27) sowie eine Öffnung (28) aufweist.

6. Fahrzeugaufbau nach einem der Ansprüche 2 bis 5, dadurch gekennzeichnet, daß die Trägerplatte (4) zum Verbinden mit dem Querträger (22), der Querstütze (21) und den Streben (1,2) plane Anschlußflächen (16 bis 20) aufweist, die in Stegen der profilierten Abschnitte vorgesehen sind.

7. Fahrzeugaufbau nach einem der Ansprüche 4 bis 6, dadurch gekennzeichnet, daß in den Plattenflächen (13,14) der Segmente (6,7) zwischen den profilierten Abschnitten (8,9,16 und 10,11,15) Versteifungssicken angeordnet sind.

8. Fahrzeugaufbau nach einem der Ansprüche 4 bis 7, dadurch gekennzeichnet, daß in mindestens einer Plattenfläche (13 und/oder 14) der Segmente (6,7) mindestens eine Luftöffnung angeordnet ist.

9. Fahrzeugaufbau nach einem der Ansprüche 1 bis 8, dadurch gekennzeichnet, daß die Trägerplatte (4) eine Luftleitvorrichtung (30) aufweist, welche an das Segment (7) anschließt und aus einem angeformten Luftleitelement (31) mit einer anschließenden Umlenkschale (32) besteht.

10. Fahrzeugaufbau nach Anspruch 9, dadurch gekennzeichnet, daß das Luftleitelement (31) jeweils zu beiden Seiten einer Fahrzeuglängsmittenachse (X-X) einen kanalartigen Lufteinlaß (33, 34) aufweist, der außenseitig jeweils von einem hochgestellten Rand (35, 36) begrenzt ist und der an die Umlenkschale (32) unmittelbar anschließt.

11. Fahrzeugaufbau nach den Ansprüchen 10, dadurch gekennzeichnet, daß die Umlenkschale (32) einen durchgehenden hochgestellten Rand (37) aufweist, der in Verlängerung des Randes (35) des Luftleitelements (31) ausgebildet ist.

12. Fahrzeugaufbau nach einem oder mehreren der vorhergehenden Ansprüche 9 bis 11, dadurch gekennzeichnet, daß die Umlenkschale (32) mit der Trägerplatte (4) und dem Luftleitelement (31) über Verbindungsmittel (39, 40) befestigt ist.

13. Fahrzeugaufbau nach Anspruch 11, dadurch gekennzeichnet, daß die hochgestellten Ränder (35, 36 und 37) des Luftleitelementes (31) und der Umlenkschale (32) einen trichterförmigen Lufteinlaß zur Erzielung einer zwangsweisen Luftzuführung zu einem Getriebe eines Antriebsaggregates bilden.

## Claims

1. A vehicle structure, comprising members which are connected to longitudinal supports of the bodywork in a reinforcing manner and which comprise two braces (1, 2) converging in a V-shape towards the rear of the vehicle and connected to each other by way of at least one transverse support, **characterized in that** the free ends of the V-shaped braces (1, 2) are connected to a one-piece support plate (4) comprising two trapezoidal segments (6, 7) connected to each other by way of a integrated transverse support (5), wherein one segment (6) is provided with profile lateral edges (**R**) extending as an extension of the V-shaped braces (1,2).

2. A vehicle structure according to Claim 1, **characterized in that** the support plate (4) is connected by way of at least one front connexion point (**V**) - with respect to the direction of travel (**F**) - situated in the longitudinal axis (**L**) of the vehicle to a transverse support (22) and by way of a further connexion point (**V1**) at the rear to a vertically orientated transverse supporting means (21) secured to the vehicle structure, and at the same time a connexion (**V2**) of the support plate (4) to the free ends of the braces (1, 2) is made at a junction point (**K**) to a lateral support (24) receiving the wheel control arms.

3. A vehicle structure according to Claim 2, **characterized in that** the segment (6) is connected by way of at least one fastening to the vertical transverse supporting means (21) and the further segment (7) is connected by way of at least one further fastening to the transverse support (22).

4. A vehicle structure according to Claim 1, 2 or 3, **characterized in that** the support plate (4) comprises a one-piece sheet-metal part with profiled portions (8, 9, 16 and 10, 11, 15) provided in the faces (13, 14) of the plate and forming the transverse support (5) and, in a continuous manner, the edges (**R**).

5. A vehicle structure according to Claim 4 or one of the preceding Claims, **characterized in that** the support plate (4) is provided with an aperture (27) and an opening (28) in the segment (6) between the profiled portions (10, 11 and 15).

6. A vehicle structure according to one of Claims 2 to 5, **characterized in that** for connexion to the transverse support (22), the transverse supporting means (21) and the braces (1, 2), the support plate (4) has plane attachment faces (16 to 20) which are provided in webs of the profiled portions.

7. A vehicle structure according to one of Claims 4 to 6, **characterized in that** reinforcement corrugations are arranged in the plate faces (13, 14) of the segments (6, 7) between the profiled portions (8, 9, 16 and 10, 11, 15).

8. A vehicle structure according to one of Claims 4 to 7, **characterized in that** at least one air opening is arranged in at least one plate face (13 and/or 14) of the segments (6, 7).

9. A vehicle structure according to one of Claims 1 to 8, **characterized in that** the support plate (4) has a air-guiding device (30) which is attached to the segment (7) and comprises an air-guiding member (31) formed integrally thereon with an attached deflecting shell (32).

10. A vehicle structure according to Claim 9, **characterized in that** the air-guiding member (31) is provided on both sides of a longitudinal median axis (**X-X**) of the vehicle with one respective duct-like air inlet (33, 34) in each case, which is bounded on the outside by one raised edge (35, 36) in each case and which is directly attached to the deflecting shell (32).

11. A vehicle structure according to Claims 10 [*sic*], **characterized in that** the deflecting shell (32) has a continuous raised edge (37) which is formed as a extension of the edge (35) of the air-guiding member (31).

12. A vehicle structure according to one or more of the preceding Claims 9 to 11, **characterized in that** the deflecting shell (32) is secured to the support plate (4) and the air-guiding member (31) by way of fastening means (39, 40).

13. A vehicle structure according to Claim 11, **characterized in that** the raised edges (35, 36 and 37) of the air-guiding member (31) and the deflecting shell (32) form a funnel-shaped air inlet in order to produce a forced air supply to a gearbox of a driving assembly.

## Revendications

1. Structure de véhicule, qui comprend des éléments assemblés à des longerons de la carrosserie de manière à les raidir, qui sont constitués de deux entretoises (1, 2) se rapprochant en V vers l'arrière du véhicule, qui sont assemblées entre elles par au moins une traverse, caractérisée en ce que les extrémités libres des entretoises (1, 2) en V sont assemblées à une plaque portante (4) d'une seule pièce, qui comprend deux segments (6, 7) en forme de trapèzes assemblés entre eux par une traverse (5) intégrée, un segment (6) présentant des bords latéraux (R) profilés s'étendant dans le prolongement des entretoises (1, 2) en V.

2. Structure de véhicule selon la revendication 1, caractérisée en ce que la plaque portante (4) est assemblée à une traverse (22) par au moins un point de liaison (V) avant - par rapport au sens de marche (F) - situé dans l'axe longitudinal (L) du véhicule et à un appui transversal (21) orienté verticalement et fixé sur la structure du véhicule, par un autre point de liaison (VI) situé à l'arrière et il se produit en même temps une liaison (V2) de la plaque portante (4) avec les extrémités libres des entretoises (1, 2) en un point de noeud (K) avec une poutre latérale (24) recevant les bras de guidage de roue.

3. Structure de véhicule selon la revendication 2, caractérisée en ce que le segment (6) est assemblé à l'appui transversal (21) vertical par au moins une fixation et l'autre segment (7) est assemblé à la traverse (22) par au moins une autre fixation.

4. Structure de véhicule selon les revendications 1, 2 ou 3, caractérisée en ce que la plaque portante (4) est constituée d'un élément en tôle d'une seule pièce avec des parties profilées (8, 9, 16 et 10, 11, 15) prévues dans les surfaces de plaque (13, 14), qui forment la traverse (5) ainsi que périphériquement les bords (R).

5. Structure de véhicule selon la revendication 4 ou l'une des revendications précédentes, caractérisée en ce que la plaque portante (4) présente un ajour (27) ainsi qu'une ouverture (28) dans le segment (6), entre les parties profilées (10, 11 et 15).

6. Structure de véhicule selon l'une des revendications 2 à 5, caractérisée en que la plaque portante (4) présente, pour l'assemblage avec la traverse (22), l'appui transversal (21) et les entretoises (1, 2), des surfaces de raccord (16 à 20) planes, qui sont prévues dans les âmes des parties profilées.

7. Structure de véhicule selon l'une des revendications 4 à 6, caractérisée en ce que des moulures de raidissement sont disposées dans les surfaces de plaque (13, 14) des segments (6, 7) entre les parties profilées (8, 9, 16 et 10, 11, 15).

8. Structure de véhicule selon l'une des revendications 4 à 7, caractérisée en ce qu'un orifice d'air au moins est disposé dans au moins une surface de plaque (13 et/ou 14) des segments (6, 7).

9. Structure de véhicule selon l'une des revendications 1 à 8, caractérisée en ce que la plaque portante (4) présente un dispositif de guidage d'air (30), qui se raccorde au segment (7) et qui est constitué d'un élément de guidage d'air (31) venu de moulage avec une coque de renvoi (32) s'y raccordant.

10. Structure de véhicule selon la revendication 9, caractérisée en ce que l'élément de guidage d'air (31) présente, de part et d'autre d'un axe médian longitudinal (X-X) du véhicule, une entrée d'air (33, 34) du type canal, qui est délimitée sur le côté extérieur par un bord (35, 36) relevé et qui se raccorde directement à la coque de déviation (32).

11. Structure de véhicule selon la revendication 10, caractérisée en ce que la coque de déviation (32) présente un bord (37) relevé continu, qui est formé dans le prolongement du bord (35) de l'élément de guidage d'air (31).

12. Structure de véhicule selon une plusieurs des revendications 9 à 11 précédentes, caractérisée en ce que la coque de déviation (32) est fixée avec la plaque portant (4) et l'élément de guidage d'air (31) par des moyens de liaison (39, 40).

13. Structure de véhicule selon la revendication 11, caractérisée en ce que les bords (35, 36 et 37) relevés de l'élément de guidage d'air (31) et de la coque de déviation (32) forment une entrée d'air en forme d'entonnoir afin d'obtenir une arrivée d'air forcée vers un engrenage d'un groupe d'entraînement.
